# EUROPÄISCHE PATENTANMELDUNG

(11) **EP 3 428 434 A1**
(43) Veröffentlichungstag der Anmeldung: **16.01.2019**
(21) Anmeldenummer: 18180561.5
(22) Anmeldetag: 28.06.2018
(51) Int. Cl.: F02K 1/52, B64D 29/02

(54) **TURBOFANTRIEBWERK**

(30) Priorität: 12.07.2017 DE 102017115644
(71) Anmelder: Rolls-Royce Deutschland Ltd & Co KG, 15827 Blankenfelde-Mahlow (DE)
(72) Erfinder: LIESER, Jan, 15827 Blankenfelde-Mahlow (DE); BÖHNING, Peer, 15827 Blankenfelde-Mahlow (DE)

(57) **Zusammenfassung**

Turbofantriebwerk, das dazu vorgesehen und geeignet ist, unter einer Tragfläche (13) eines Flugzeugs angeordnet zu sein, wobei das Turbofantriebwerk aufweist: ein Kerntriebwerk, einen Primärstromkanal (5), einen Sekundärstromkanal (4), eine Maschinenachse (90) und eine Schubdüse (16), die eine separate Schubdüse für den Sekundärstromkanal (4) oder eine integrale Schubdüse für den Primärstromkanal (5) und den Sekundärstromkanal (4) ist, und die eine Mittellinie (91) und eine Düsenaustrittsfläche (160) aufweist. Es ist vorgesehen, dass die Schubdüse (16) unter Ausbildung eines Knickwinkels (α), den die Mittellinie (91) der Schubdüse (16) zumindest am Düsenaustritt gegenüber der Maschinenachse (90) bildet, gegenüber der Maschinenachse (90) gekippt und die Düsenaustrittsfläche (160) der Schubdüse (16) unter Ausbildung eines Schrägstellungswinkels (β), den eine Normale (N) der Düsenaustrittsfläche (160) gegenüber der Mittellinie (91) der Schubdüse (16) bildet, gegenüber der Mittellinie (91) der Schubdüse (16) schräg ausgerichtet ist.

## Beschreibung

Die Erfindung betrifft ein Turbofantriebwerk gemäß dem Oberbegriff des Patentanspruchs 1.

An einer Tragfläche befestigte Turbofantriebwerke sind derart unter der Tragfläche angeordnet, dass in der Startphase der vom Turbofantriebwerk ausgestoßene heiße Austrittsstrahl nicht in Interaktion mit den beim Start vollständig ausgefahrenen hinteren Flügelklappen der Tragfläche (auch als "Flaps" bezeichnet) tritt. Grundsätzlich kann dies dadurch erreicht werden, dass ein ausreichender vertikaler Abstand zwischen Turbofantriebwerk und der Unterseite der Tragfläche eingehalten wird. Bei Triebwerken mit großem Durchmesser, wie sie zur Erreichung eines großen Bypass-Verhältnisses zunehmend von Interesse sind, ist der genannte vertikale Abstand jedoch beschränkt durch einen Mindestabstand, den das Turbofantriebwerk vom Boden einhalten muss.

Aus der US 6 969 028 B2 und der US 8 157 207 B2 ist es bekannt, die Schubdüse eines Turbofantriebwerks derart auszubilden, dass die Düsenaustrittsfläche der Schubdüse schräg zur Maschinenachse des Turbofantriebwerks verläuft.

Der vorliegenden Erfindung liegt die Aufgabe zu Grunde, ein unter einer Tragfläche eines Flugzeugs anordbares Turbofantriebwerk bereitzustellen, bei dem eine Interaktion des Austrittsstrahls mit den Flügelklappen auch bei großen Turbofantriebwerken verhindert werden kann.

Diese Aufgabe wird durch ein Turbofantriebwerk mit den Merkmalen des Patentanspruchs 1 gelöst. Ausgestaltungen der Erfindung sind in den Unteransprüchen angegeben.

Danach betrachtet die vorliegende Erfindung ein unter einer Tragfläche eines Flugzeugs anordbares Turbofantriebwerk, das aufweist: ein Kerntriebwerk, das einen Verdichter, eine Brennkammer und eine Turbine umfasst, einen Primärstromkanal, der durch das Kerntriebwerk führt, einen Sekundärstromkanal, der am Kerntriebwerk vorbei führt, und eine Maschinenachse des Kerntriebwerks. Des Weiteren umfasst das Turbofantriebwerk eine Schubdüse. Die Schubdüse kann eine separate Schubdüse für den Sekundärstromkanal oder eine integrale Schubdüse für den Primärstromkanal und den Sekundärstromkanal sein. Die Schubdüse weist eine Mittellinie und eine Düsenaustrittsfläche auf.

Die Erfindung sieht vor, dass die Schubdüse unter Ausbildung eines Knickwinkels, den die Mittellinie der Schubdüse zumindest am Düsenaustritt gegenüber der Maschinenachse bildet, gegenüber der Maschinenachse gekippt und die Düsenaustrittsfläche der Schubdüse unter Ausbildung eines Schrägstellungswinkels, den eine Normale der Düsenaustrittsfläche gegenüber der Mittellinie der Schubdüse bildet, gegenüber der Mittellinie der Schubdüse schräg ausgerichtet ist. Der Knickwinkel wird auch als "Kink" oder "Kinkwinkel" und der Schrägstellungwinkel auch als "Scarf" oder "Scarfwinkel" bezeichnet. Das Kippen der Schubdüse zur Ausbildung eines Knickwinkels erfolgt dabei senkrecht zur vertikalen Ebene.

Die Erfindung beruht auf dem Gedanken, die Austrittsrichtung des Austrittsstrahls aus der Schubdüse und damit aus dem Turbofantriebwerk durch zwei Maßnahmen zu beeinflussen: zum einen durch ein Verkippen der Schubdüse gegenüber der Maschinenachse, so dass die Mittellinie der Schubdüse nicht mehr identisch ist mit der Maschinenachse, und zum anderen durch eine schräge Ausrichtung der Düsenaustrittsfläche, so dass die Normale der Düsenaustrittsfläche nicht mehr identisch ist mit der Mittellinie der Schubdüse.

Durch diese beiden Maßnahmen, die in geeigneter Weise kombinierbar sind, kann erreicht werden, dass der resultierende Vektor des Austrittsstrahls aus dem Triebwerk beim Startschub (MTO = Maximum Takeoff Thrust) nicht horizontal, sondern schräg nach unten gerichtet und vertikal nach unten verschoben ist, so dass der Gasstrom an den ausgefahrenen Flügelklappen vorbei geführt wird. Die Erfindung nutzt dabei den Umstand aus, dass die Ablenkung des Austrittsstrahls, die durch den Schrägstellungswinkel verursacht ist, abhängig vom Betriebszustand ist. Dagegen ist die Ablenkung des Austrittsstrahls, die durch den Knickwinkel verursacht wird, bei allen Betriebszuständen gleich. Hierdurch kann erreicht werden, dass bei anderen Betriebszuständen als beim Start, insbesondere beim Reiseflug, der resultierende Vektor des Austrittsstrahls bzw. der Schubvektor horizontal verläuft oder zumindest in geringerem Maße abgelenkt ist als beim Start.

Dabei sieht eine Ausgestaltung der Erfindung vor, dass der Knickwinkel und der Schrägstellungswinkel ein unterschiedliches Vorzeichen aufweisen. Insbesondere kann vorgesehen sein, dass der Knickwinkel negativ ist (wenn die axiale Richtung die x-Richtung ist), wobei die Mittellinie der Schubdüse nach unten gegenüber der Maschinenachse gekippt ist. Der Schrägstellungswinkel ist dagegen positiv (wenn die axiale Richtung die x-Richtung ist), wobei die Normale der Düsenaustrittsfläche nach oben gegenüber der Mittellinie der Schubdüse gekippt ist. Beim Start wirkt primär der Effekt der Ablenkung des Austrittsstrahls durch den Knickwinkel. Aufgrund der nach unten gekippten Ausrichtung der Schubdüse verläuft der Austrittsstrahl nicht in der axialen Richtung der Maschinenachse, sondern ist gegenüber der Maschinenachse nach unten abgelenkt, so dass der Austrittsstrahl an den ausgefahrenen Flügelklappen der Tragfläche vorbei geführt wird. Mit zunehmenden Druckverhältnis zwischen Düseninnendruck und Umgebungsdruck wird der Effekt der Strahlablenkung durch den Schrägstellungswinkel zunehmend stärker. Die Strahlablenkung aufgrund des Schrägstellungswinkels wirkt in anderer Richtung, d.h. die Ablenkung des Austrittsstrahls, die durch den Schrägstellungswinkel verursacht ist, erfolgt nach oben, wobei dieser Effekt mit steigendem Druckverhältnis zwischen Düseninnendruck und Umgebungsdruck zunimmt. Dabei kann vorgesehen sein, dass die beiden Effekte sich beim Betriebszustand des Reiseflugs gerade aufheben, so dass im Reiseflug der Schubvektor in der axialen Richtung der Maschinenachse verläuft.

Es wird bezüglich der verwendeten Termini auf folgendes hingewiesen:
Die Mittellinie der Schubdüse ist bei rotationssymmetrischer Schubdüse identisch mit der Rotationsachse der Schubdüse. Allerdings ist die Schubdüse nicht notwendigerweise rotationssymmetrisch. Wenn die Schubdüse nicht rotationssymmetrisch ist, wird als Mittellinie der Schubdüse diejenige Linie definiert, die bei einem vertikalen Längsschnitt, der die Maschinenachse enthält, die Mittellinie der Schubdüse bildet.

Wie bereits erwähnt, kann die Schubdüse eine separate Schubdüse für den Sekundärstromkanal oder eine integrale Schubdüse für den Primärstromkanal und den Sekundärstromkanal sein. Im ersten Fall sind separate (primäre und sekundäre) Schubdüsen für den Primärstromkanal und den Sekundärstromkanal vorgesehen. Der kalte Strahl des Sekundärstromkanals hüllt den heißen Strahl des Primärstromkanals dabei ein, ohne dass eine interne Strahlvermischung stattfindet. Diese Ausführungsvariante wird auch als "short cowl" bezeichnet. Die Erfindung betrachtet dabei die Schubdüse des Sekundärstromkanals. Im zweiten Fall der integralen Schubdüse ist eine Schubdüse für den Primärstromkanal und den Sekundärstromkanal vorgesehen, wobei eine interne Strahlvermischung stattfindet. Diese Ausführungsvariante wird auch als "long cowl" bezeichnet.

Die Düsenaustrittsfläche ist die Fläche, die durch die Hinterkante der Schubdüse berandet wird. Bei der Schubdüse eines Sekundärstromkanals ist sie ringförmig. Bei einer integralen Schubdüse ist sie ringförmig, wenn ein Zentralkörper vorhanden ist, oder kreisförmig. Wenn der Schrägstellungswinkel gleich Null ist (was nicht der Erfindung entspricht), verläuft die Düsenaustrittsfläche senkrecht zur Mittellinie der Schubdüse. Eine Normale der Düsenaustrittsfläche verläuft für diesen Fall parallel zur Mittellinie. Wenn der Schrägstellungswinkel entsprechend der vorliegenden Erfindung ungleich Null ist, gibt der Schrägstellungswinkel die Schrägstellung der Düsenaustrittsfläche im Vergleich zu einer Anordnung senkrecht zur Mittellinie an. Mathematisch ist dieser Winkel identisch zu dem Winkel, den ein Normalenvektor der Düsenaustrittsfläche mit der Mittellinie der Schubdüse bildet.

Wenn die Hinterkante der Schubdüse nicht in einer Ebene liegt, beispielsweise weil die Hinterkante gewellt oder gekrümmt ausgebildet ist, wird als Düsenaustrittsfläche diejenige Fläche definiert, die den oder einen axial hintersten Punkt der Hinterkante der Schubdüse und den oder einen axial vordersten Punkt der Hinterkante der Schubdüse aufweist und deren Normalenvektor dabei in der vertikalen Ebene liegt.

Die Schubdüse des Turbofantriebwerks kann grundsätzlich beliebig ausgebildet sein, beispielsweise als konvergente Schubdüse oder als konvergent-divergente Schubdüse, als verstellbare Schubdüse oder als nicht verstellbare Schubdüse.

Es wird weiter darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofantriebwerks. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk. Die Bezeichnung "vor" bedeutet somit "stromaufwärts" und die Bezeichnung "hinter" bedeutet "stromabwärts". Begriffe wie "äußere" oder "innere" beziehen sich immer auf die radiale Richtung. Die vertikale Ebene ist diejenige Ebene, die die Maschinenachse bzw. x-Achse enthält und sich in vertikaler Richtung erstreckt (ϕ = 0°). Begriffe wie "obere" oder "untere" beziehen sich immer auf die vertikale Richtung.

Gemäß einer Ausgestaltung der Erfindung liegt der Knickwinkel im Bereich kleiner 0° und größergleich -4°, also im halboffenen Intervall ]0, -4]. Dabei wird in der üblichen mathematischen Notierung eine Rechtsdrehung als mathematisch negativer Drehsinn bezeichnet. Der Schrägstellungswinkel liegt beispielsweise im Bereich größer 0° und kleinergleich 5°, also im halboffenen Intervall ]0, 5]. Die axiale Richtung des Turbofantriebwerks ist die x-Richtung.

Eine weitere Ausgestaltung der Erfindung sieht vor, dass zur Ausbildung des Schrägstellungswinkels ein erster Hinterkantenabschnitt der Schubdüse sich weiter in Längsrichtung der Schubdüse erstreckt als ein diametral gegenüberliegender zweiter Hinterkantenabschnitt der Schubdüse. Die Schrägstellung der Düsenaustrittsfläche wird somit konstruktiv erreicht, indem ausgehend von einer nominalen Ausrichtung senkrecht zur Maschinenachse ein erster Bereich der Hinterkante in Längsrichtung der Schubdüse linear verlängert und ein diametral gegenüberliegender Bereich in Längsrichtung der Schubdüse verkürzt wird. Natürlich bezeichnen die Begriffe "Verlängerung" und "Verkürzung" hierbei nicht eine tatsächliche Verlängerung oder Verkürzung eines bereits hergestellten Bauteils, sondern gedankliche Maßnahmen, um von einer Schubdüse ohne Schrägstellungswinkel strukturell zu einer Schubdüse mit Schrägstellungswinkel zu gelangen.

Dabei kann vorgesehen sein, dass die Hinterkante zwischen dem ersten Hinterkantenabschnitt und dem zweiten Hinterkantenabschnitt geradlinig verläuft. Die Hinterkante liegt dann in einer Ebene. Alternativ kann vorgesehen sein, dass die Hinterkante zwischen dem ersten Hinterkantenabschnitt und dem zweiten Hinterkantenabschnitt gekrümmt oder gewellt verläuft. In diesem Fall liegt die Hinterkante nur näherungsweise in einer Ebene. Als Ebene, die den Schrägstellungswinkel definiert, wird für diesen Fall, wie oben ausgeführt, diejenige Ebene angesehen, die den oder einen axial hintersten Punkt der Hinterkante der Schubdüse und den oder einen axial vordersten Punkt der Hinterkante der Schubdüse aufweist und deren Normalenvektor dabei in der vertikalen Ebene liegt.

Der erste Hinterkantenabschnitt der Schubdüse, der sich weiter in Längsrichtung der Schubdüse erstreckt, ist in einer Ausgestaltung der Erfindung an der Unterseite der Schubdüse ausgebildet. Dementsprechend ist der diametral gegenüberliegende zweite Hinterkantenabschnitt der Schubdüse an der Oberseite der Schubdüse ausgebildet.

Die Erfindung sieht vor, dass der Knickwinkel definiert ist als der Winkel, den die Mittellinie der Schubdüse zumindest am Düsenaustritt gegenüber der Maschinenachse bildet. Dies umfasst Ausgestaltungen, bei denen die Mittellinie der Schubdüse keine Gerade, sondern gekrümmt ist, beispielsweise wenn die Schubdüse erst zum Düsenaustritt hin eine Verkippung gegenüber der Maschinenachse ausbildet. In anderen Ausgestaltungen bildet die Mittellinie der Schubdüse eine Gerade. Gemäß einer Ausgestaltung der Erfindung ist vorgesehen, dass die Schubdüse insgesamt oder zumindest angrenzend an den Düsenausgang gegenüber der Maschinenachse verkippt ist. Hierzu sieht eine Ausführungsvariante vor, dass die Schubdüse um den Knickwinkel gegenüber der Maschinenachse verkippt ist, wobei die Drehachse, um die die Schubdüse rotiert ist, die Maschinenachse schneidet und senkrecht zur vertikalen Ebene verläuft.

Eine weitere Ausgestaltung der Erfindung betrifft das Verhältnis von vertikalem Abstand h zwischen der Hinterkante der Flügelklappe und der Maschinenachse zu dem axialen Abstand L zwischen der Düsenaustrittsfläche und der axialen Position der Hinterkante der Flügelklappe. Dieses Verhältnis liegt gemäß einer Ausgestaltung der Erfindung im Bereich zwischen 0,2 und 1. Das Verhältnis wird dabei bei vollständig ausgefahrener hintere Flügelklappe der Tragfläche betrachtet.

Eine weitere Ausgestaltung der Erfindung betrifft das Verhältnis des axialen Abstands L zwischen der Düsenaustrittsfläche und der axialen Position der Hinterkante der Flügelklappe zum Durchmesser D der Düsenaustrittsfläche. Dieses Verhältnis liegt gemäß einer Ausgestaltung der Erfindung zwischen 2 und 3. Das Verhältnis wird dabei wiederum bei vollständig ausgefahrener hintere Flügelklappe der Tragfläche betrachtet. Sofern die Düsenaustrittsfläche nicht kreissymmetrisch ist, bezeichnet D den größten Durchmesser der Düsenaustrittsfläche.

Die Erfindung betrifft des Weiteren ein ziviles oder militärisches Flugzeug mit einem Turbofantriebwerk gemäß Anspruch 1, das unter einer Tragfläche des Flugzeugs angeordnet ist.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2: schematisch die Installation eines Turbofantriebwerks unterhalb einer Tragfläche unter Darstellung relevanter Parameter;
- Figur 3: ein unterhalb einer Tragfläche installiertes Turbofantriebwerk unter Darstellung eines Schrägstellungswinkels und eines Knickwinkels gemäß einer Ausgestaltung der vorliegenden Erfindung;
- Figur 4: schematisch ein unterhalb einer Tragfläche installiertes Turbofantriebwerk mit gesonderter Schubdüse für den Sekundärstromkanal;
- Figur 5: schematisch ein unterhalb einer Tragfläche installiertes Turbofantriebwerk mit integraler Schubdüse;
- Figur 6a: schematisch die Transformation einer nominalen Schubdüse in eine Schubdüse, die einen Schrägstellungswinkel aufweist;
- Figur 6b: eine Darstellung entsprechend der Figur 6a in vergrößerte Darstellung, wobei lediglich eine Hälfte der Schubdüse oberhalb der Mittellinie dargestellt ist;
- Figur 7a: schematisch die Transformation einer nominalen Schubdüse in eine Schubdüse, die einen Knickwinkel aufweist;
- Figur 7b: eine Darstellung entsprechend der Figur 7a in vergrößerte Darstellung, wobei lediglich eine Hälfte der Schubdüse oberhalb der Mittellinie dargestellt ist;
- Figur 8: schematisch ein unterhalb einer Tragfläche installiertes Turbofantriebwerk, dessen Schubdüse unter Ausgestaltung eines Knickwinkels und eines Schrägstellungswinkel ausgebildet ist, unter Darstellung des Austrittsstrahls und der Flügelklappen beim Start;
- Figur 9: das Turbofantriebwerk der Figur 8 unter Darstellung des Austrittsstrahls und der Flügelklappen beim Reiseflug; und
- Figur 10: ein Diagramm, das die Ablenkung des Austrittsstrahls gegenüber der Maschinenachse für mehrere Knickwinkel und Schrägstellungswinkel und für verschiedene Betriebszustände des Turbofantriebwerks zeigt.

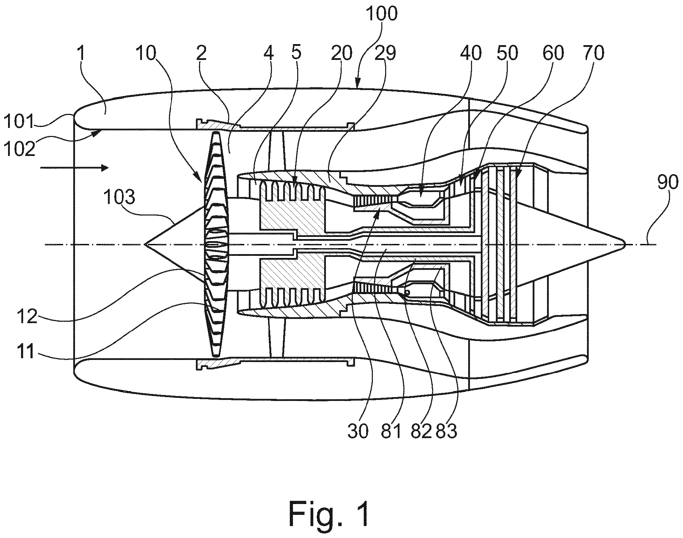

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 ist in einer Triebwerksgondel 1 angeordnet. Diese ist beispielsweise über einen Pylon unterhalb einer Tragfläche angeordnet. Die Triebwerksgondel 1 umfasst eine Einlauflippe 101 und bildet innenseitig einen Triebwerkseinlauf 102 aus, der einströmende Luft dem Fan 10 zuführt. Der Fan 10 weist eine Mehrzahl von Fan-Schaufeln 11 auf, die mit einer Fan-Scheibe 12 verbunden sind. Der Annulus der Fan-Scheibe 12 bildet dabei die radial innere Begrenzung des Strömungspfads durch den Fan 10. Radial außen wird der Strömungspfad durch ein Fangehäuse 2 begrenzt. Stromaufwärts der Fan-Scheibe 12 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5, der auch als Hauptströmungskanal bezeichnet wird. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Am hinteren Ende bildet das Turbofantriebwerk eine Schubdüse aus. Es kann vorgesehen sein, dass gesonderte Schubdüsen für den Primärstromkanal 5 und den Sekundärstromkanal 4 bereitgestellt werden, oder dass eine integrale Schubdüse bereitgestellt wird. In letzterem Fall werden der Primärstrom und der Sekundärstrom typischerweise vermischt, bevor sie in die integrale Schubdüse geleitet werden. Das Turbofantriebwerk kann des Weiteren einen Austrittskonus umfassen, um gewünschte Querschnitte des Strömungskanals zu realisieren.

Die rotierenden Komponenten besitzen eine gemeinsame Rotations- bzw. Maschinenachse 90. Die Rotationsachse 90 definiert eine axiale Richtung des Turbofantriebwerks. Eine radiale Richtung des Turbofantriebwerks verläuft senkrecht zur axialen Richtung.

Im Kontext der vorliegenden Erfindung sind die Ausgestaltung der Schubdüse und die Richtung des von der Schubdüse abgegebenen Austrittsstrahls von Bedeutung. Hierzu sieht die Erfindung vor, die Schubdüse unter Ausbildung eines Knickwinkels und eines Schrägstellungswinkels auszubilden.

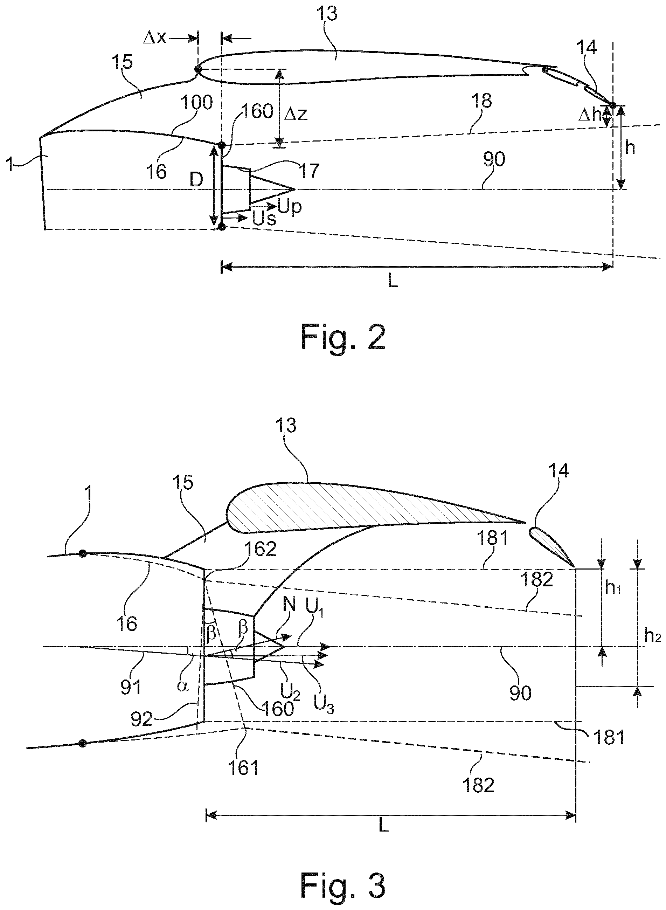

Die Figur 2 zeigt schematisch die Installation eines Turbofantriebwerk 100 an der Unterseite einer Tragfläche 13. Die Triebwerksgondel 1, in der das Turbofantriebwerk angeordnet ist, ist über einen Pylon 15 mit der Tragfläche 13 verbunden. Die Tragfläche 13 umfasst an ihrem stromabwärtigen Ende Flügelklappen 14, die abhängig vom Flugmodus unterschiedlich stark ausgefahren werden können. Sie stellen Auftriebshilfen dar und sind beim Start vollständig ausgefahren. Die Figur 2 zeigt den Zustand beim Start.

Das Turbofantriebwerk bildet an seinem Ende eine separate Schubdüse 16 für den Sekundärstromkanal und eine separate Schubdüse 17 für den Primärstromkanal aus. Die Schubdüse 16 bildet an ihrer Hinterkante eine Düsenaustrittsfläche 160 aus. Der jeweils austretende Schubvektor ist mit Uₛ bzw. Uₚ gekennzeichnet. Der kalte Strahl des Sekundärstromkanals hüllt dabei des heißen Strahl des Primärstromkanals ein. Der durch beide Komponenten bereitgestellte Strahl wird als Austrittsstrahl 18 bezeichnet. Dieser weist unmittelbar hinter dem Turbofantriebwerk eine zylindrische oder leicht konische Form auf.

Mit D wird der größte Durchmesser der Düsenaustrittsfläche 160 der Schubdüse 16 für den Sekundärstromkanal bezeichnet. Mit h wird der vertikale Abstand zwischen der Hinterkante der Flügelklappe 14 und der Maschinenachse 90 bzw. der Mittellinie der Schubdüse 16 bezeichnet. Mit Δh wird der vertikale Abstand zwischen der Hinterkante der Flügelklappe 14 und der Begrenzung des Austrittsstrahls 18 bezeichnet. Mit L wird der axiale Abstand zwischen der Düsenaustrittsfläche 160 und der axialen Position der Hinterkante der Flügelklappe 14 bezeichnet.

Es ist zur Vermeidung von Lärm und zur Materialschonung anzustreben, dass Δh stets größer Null ist, d.h. der Austrittsstrahl 18 nicht oder nur unwesentlich mit den Flügelklappen 14 interagiert. Beim Start, wenn die Flügelklappen 14 vollständig ausgefahren sind und sich dabei schräg nach unten erstrecken, sowie bei Verwendung großer Turbofantriebwerke kann es schwierig oder unmöglich sein, diese Bedingung einzuhalten. Dabei ist zu beachten, dass der vertikale Abstand Δz zwischen der Tragfläche 13 und dem Turbofantriebwerk 100 nicht beliebig erhöht werden kann, da ein Mindestabstand gegenüber dem Boden gewährleistet sein muss. Auch die Möglichkeit, durch Variation von Δx den Austrittsstrahl 18 von den Flügelklappen 14 fernzuhalten, ist begrenzt (vgl. Figur 2).

Zur Lösung dieser Problematik sieht die Erfindung vor, die äußere Schubdüse (oder, wenn eine integrale Schubdüse verwendet wird, die integrale Schubdüse) unter einem Knickwinkel und einem Schrägstellungswinkel anzuordnen, wodurch die Richtung des Austrittsstrahls 18 beeinflusst wird. Dies wird anhand der Figur 3 erläutert, in der die gestrichelte Linie die unter einem Knickwinkel und einem Schrägstellungswinkel angeordnete Schubdüse 16 darstellt.

Im Vergleich zu der herkömmlichen Ausgestaltung einer Schubdüse gemäß der Figur 2 hat die Schubdüse der Figur 3 eine zweifache Modifikation erhalten. Zum einen ist die Schubdüse 16 unter Ausbildung eines Knickwinkels α, den die Mittellinie 91 der Schubdüse 160 gegenüber der Maschinenachse 90 bildet, gegenüber der Maschinenachse 90 gekippt. Zum anderen ist die Düsenaustrittsfläche 160 der Schubdüse 16 unter Ausbildung eines Schrägstellungswinkels β gegenüber einer Ebene 92, die senkrecht auf der Mittellinie 91 der Schubdüse 16 liegt, schräg ausgerichtet. Der Winkel β ist dabei auch der Winkel, den eine Normale N der Düsenaustrittsfläche 160 zur Mittellinie 91 der Schubdüse 16 bildet.

Dabei wird darauf hingewiesen, dass eine Schrägstellung der Düsenaustrittsfläche 160 bezogen auf die Mittellinie 91 der Schubdüse 16 und nicht bezogen auf die Maschinenachse 90 vorliegt. Denn bezogen auf die Maschinenachse 90 ergibt sich bereits eine Schrägstellung der Düsenaustrittsfläche 160 durch das Verkippen der Schubdüse 16 um den Knickwinkel α.

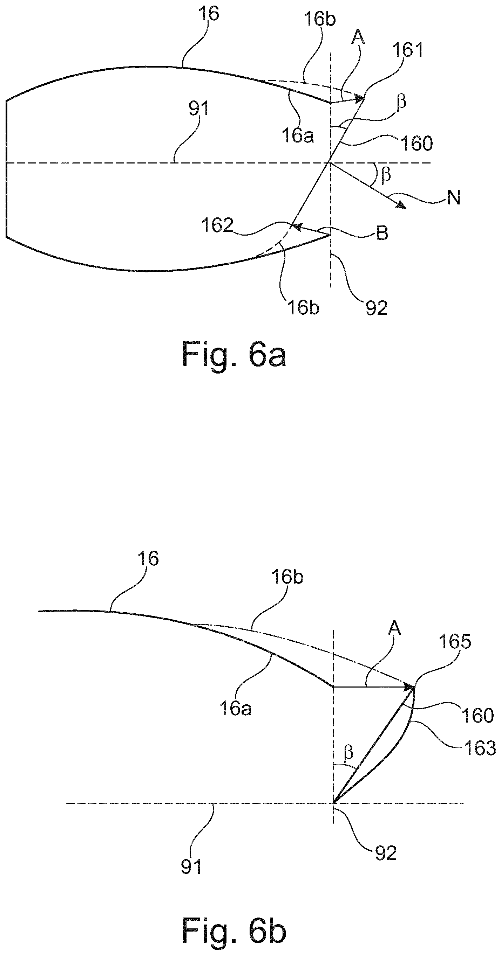

Die Schrägstellung der Düsenaustrittsfläche 160 wird erreicht, indem ein erster unterer Hinterkantenabschnitt 161 der Schubdüse 16 sich weiter in axialer Richtung erstreckt als ein diametral gegenüber liegender zweiter oberer Hinterkantenabschnitt 162 der Schubdüse 16. Dies wird in Bezug auf die Figuren 6a und 6b noch weitergehend erläutert werden.

Die Figur 3 zeigt des Weiteren verschiedene Werte U₁, U₂, U₃ für den Schubvektor, verschiedene Verläufe bzw. Richtungen des Austrittsstrahls 181, 182 und verschiedene Werte h₁, h₂ für den vertikaler Abstand zwischen der Hinterkante der Flügelklappe 14 und der Mittellinie der Schubdüse 16 (bzw. des Austrittsstrahls 181, 182). Dies hängt wie folgt zusammen.

Die Situation ohne Knickwinkel α und ohne Schrägstellungswinkel β der Schubdüse geben der Schubvektor U₁ und der Austrittsstrahl 181 wieder. Der vertikale Abstand zwischen der Hinterkante der Flügelklappe 14 und der Mittellinie der Schubdüse 16 bzw. des Austrittsstrahls 181 beträgt für diesen Fall h₁.

Wenn die Schubdüse 16 dagegen um den Knickwinkel α verkippt wird und der Normalvektor N ihrer Austrittsfläche 160 gegenüber der Mittellinie 91 der Schubdüse 16 um den Schrägstellungswinkel β gedreht ist, ergibt sich ein Schubvektor U₂, der gegenüber der Mittelachse 90 beim Start im Wesentlichen den Winkel α bildet und dementsprechend schräg nach unten gerichtet ist. Somit ist der Austrittsstrahl 182 für diesen Fall gegenüber dem Austrittsstrahl 181 stärker nach unten gerichtet und weist einen vergrößerten vertikalen Abstand h₂ zwischen der Hinterkante der Flügelklappe 14 und der Mittellinie der verkippten Schubdüse 16 bzw. des Austrittsstrahls 182 auf, so dass die Gefahr einer Interaktion mit den Flügelklappen 14 reduziert ist. Dementsprechend kann das Triebwerk in geringerem vertikalen Abstand zur Tragfläche 13 angeordnet werden, was insbesondere bei Triebwerken mit großem Durchmesser erforderlich ist, um trotz des großen Durchmessers des Triebwerks den erforderlichen Abstand zum Boden zu gewährleisten.

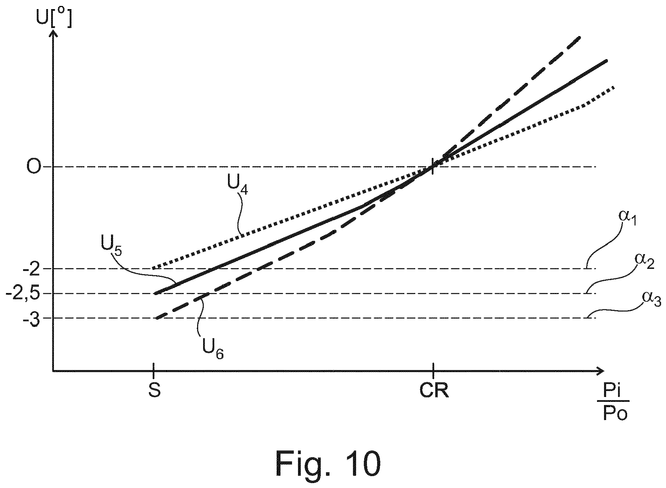

Dabei ist darauf hinzuweisen, dass die durch den Knickwinkel α bewirkte Ablenkung des Austrittsstrahls unabhängig vom Betriebszustand des Turbofantriebwerk, insbesondere unabhängig von dem Verhältnis zwischen dem Düseninnendruck und dem Umgebungsdruck ist. Dagegen ist die durch den Schrägstellungswinkel β bewirkte Ablenkung des Austrittsstrahls aus physikalischen Gründen abhängig vom Betriebszustand des Turbofantriebwerk. Dies wird in Bezug auf die Figur 10 noch näher erläutert werden. Diese Abhängigkeit führt dazu, dass die durch den Schrägstellungswinkel β bewirkte Ablenkung erst bei einem größeren Verhältnis zwischen dem Düseninnendruck und dem Umgebungsdruck zum Tragen kommt.

Die Erfindung sieht dabei in der in Figur 3 dargestellten Ausführungsvariante, jedoch nicht notwendigerweise vor, dass der Schrägstellungswinkel β und der Knickwinkel α ein unterschiedliches Vorzeichen aufweisen. Typische Werte für den Schrägstellungswinkel β liegen zwischen 0° und 5°. Typische Werte für den Knickwinkel α liegen zwischen 0° und -4°, wobei das Vorzeichen den Drehsinn gegenüber der x-Achse (also der Maschinenachse) im mathematischen Sinne angibt.

Die folgende Tabelle gibt beispielhaft vorteilhafte Kombinationen von Schrägstellungswinkel β und Knickwinkel α wieder:

| Schrägstellungswinkel β [°] | Knickwinkel α [°] |
|---|---|
| 1,5 | -2 |
| 2,5 | -3 |
| 4 | -4 |

Da die durch den Schrägstellungswinkel β bewirkte Ablenkung erst bei einem größeren Verhältnis zwischen dem Düseninnendruck und dem Umgebungsdruck zum Tragen kommt, dominierte beim Start die durch den Knickwinkel α verursachte Ablenkung, so dass der Austrittsstrahl schräg nach unten abgelenkt ist.

Der Schrägstellungswinkel ist dagegen positiv. Mit zunehmenden Druckverhältnis zwischen Düseninnendruck und Umgebungsdruck wird der Effekt der Strahlablenkung durch den Schrägstellungswinkel zunehmend stärker. Die Strahlablenkung aufgrund des Schrägstellungswinkels β wirkt dabei in anderer Richtung, d.h. die Ablenkung des Austrittsstrahls, die durch den Schrägstellungswinkel β verursacht ist, erfolgt nach oben, wobei dieser Effekt mit steigenden Druckverhältnis zwischen Düseninnendruck und Umgebungsdruck zunimmt. Die Figur 3 zeigt schematisch und beispielhaft den Schubvektor U₃, der sich aufgrund der Überlagerung der beschriebenen Effekte beim Reiseflug einstellt. Der Schubvektor U₃ verläuft dabei im Wesentlichen parallel zum Schubvektor U₁, der die Situation ohne Knickwinkel α und ohne Schrägstellungswinkel β der Schubdüse wiedergibt.

Für die in Bezug auf die Figur 2 erläuterten Paramater h, L und D gilt bei einer mit einem Knickwinkel und einem Schrägstellungswinkel verbundenen Schubdüse gemäß einem Ausführungsbeispiel, dass bezogen auf die vollständig ausgefahrene hintere Flügelklappe 14 das Verhältnis von vertikalem Abstand h zwischen der Hinterkante der Flügelklappe und der Maschinenachse zu dem axialen Abstand L zwischen der Düsenaustrittsfläche und der axialen Position der Hinterkante der Flügelklappe 14 im Bereich zwischen 0,2 und 1 liegt. Das Verhältnis von dem axialen Abstand L zwischen der Düsenaustrittsfläche und der axialen Position der Hinterkante der Flügelklappe 14 zum Durchmesser D der Düsenaustrittsfläche liegt beispielsweise im Bereich zwischen 2 und 3.

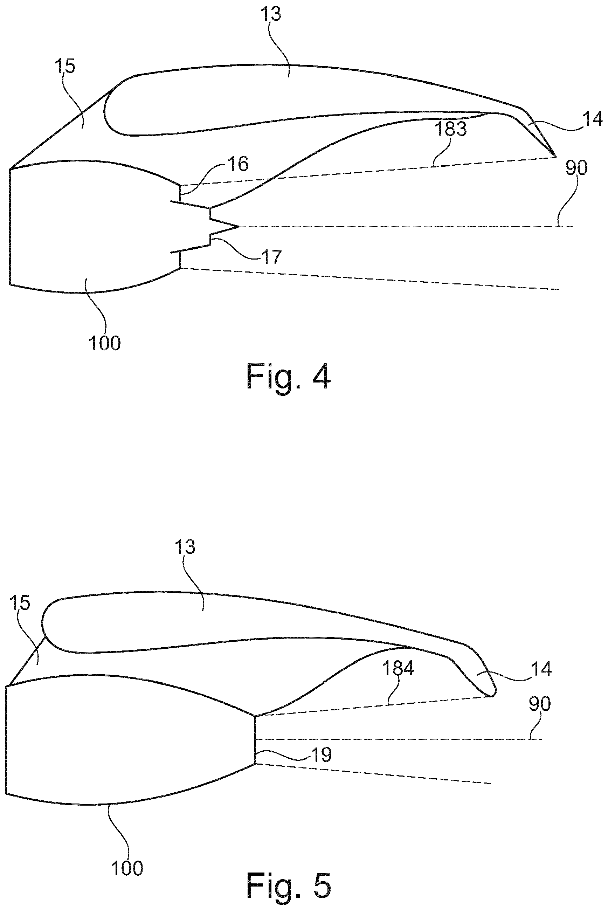

Die Figuren 4 und 5 verdeutlichen, dass die Schubdüse, die erfindungsgemäß unter Ausbildung eines Knickwinkels und eines Schrägstellungswinkel ausgebildet ist, eine separate Schubdüse eines Sekundärstromkanals oder eine integrale Schubdüse sein kann. So zeigt die Figur 4 schematisch die Ordnung eines Turbofantriebwerks 100 unterhalb einer Tragfläche 13 mittels eines Pylons 15, wobei das Turbofantriebwerk entsprechend der Figur 2 eine separate Schubdüse 16 für den Sekundärstromkanal und eine separate Schubdüse 17 für den Primärstromkanal aufweist. Der Austrittsstrahl ist mit 183 bezeichnet. Beim Ausführungsbeispiel der Figur 5 ist eine integrale Schubdüse 19 vorgesehen, wobei der Primärstrom und der Sekundärstrom vor Eintritt in die integrale Schubdüse gemischt werden. Der Austrittsstrahl ist mit 184 bezeichnet.

Die Figuren 6a und 6b verdeutlichen die strukturelle Veränderung, die eine nominelle Schubdüse 16 erfährt, um einen Schrägstellungswinkel zu realisieren. Als nominelle Schubdüse wird dabei eine Schubdüse bezeichnet, deren Düsenaustrittsfläche in einer Ebene 92 liegt, die senkrecht zur Mittellinie 91 der Schubdüse 16 verläuft.

Die durchgezogene Linie 16a zeigt dabei die nominelle Schubdüse. Die Hinterkante der Schubdüse liegt in der Ebene 92 und definiert die Düsenaustrittsfläche. Ausgehend von einer solchen nominellen Schubdüse wird die mit einem Schrägstellungswinkel versehene Schubdüse durch zwei Linearverschiebungen erreicht. So wird ein erster Bereich der Schubdüse entsprechend dem Pfeil A in Längsrichtung der Mittellinie 91 verlängert. Gleichzeitig wird ein diametral gegenüber liegender zweiter Bereich der Schubdüse entsprechend dem Pfeil B entgegen der Längsrichtung der Mittellinie 91 in linearer Richtung verkürzt. Dadurch wird erreicht, dass ein erster Hinterkantenabschnitt 161 der Schubdüse 16 sich weiter in axialer Richtung erstreckt als ein diametral gegenüber liegender zweiter Hinterkantenabschnitt 162 der Schubdüse 16. Der Winkel β gegenüber der Ebene 92 ist der Schrägstellungswinkel. Dieser ist identisch mit dem Winkel zwischen dem Normalenvektor N und der Mittellinie 91. Die Innenkontur der Schubdüse wird entsprechend der gestrichelten Linie 16b modifiziert. Die mit einem Schrägstellungswinkel versehene Schubdüse ist somit aus zwei in entgegengesetzter Richtung erfolgten linearen konstruktiven Verlängerungen bzw. Verkürzungen hervorgegangen.

Die Figur 6b entspricht der Figur 6a, wobei lediglich der Bereich oberhalb der Mittellinie 91 dargestellt ist. Die Erläuterungen in Bezug auf die Figur 6a gelten entsprechend. Es ist jedoch zusätzlich beispielhaft dargestellt, dass die Hinterkante 165 der Schubdüse 16 nicht notwendigerweise gradlinig verläuft, wie dies in der Figur 6a dargestellt ist. So kann alternativ vorgesehen sein, dass die Hinterkante 165 gewellt oder in anderer Weise gekrümmt ist. Eine entsprechende alternative Hinterkantenform ist durch die Linie 163 angedeutet. In einem solchen Fall wird als Düsenaustrittsfläche 160 die Fläche definiert, die den axial hintersten Punkt 161 der Hinterkante der Schubdüse und den axial vordersten Punkt 162 der Hinterkante der Schubdüse aufweist und deren Normalenvektor dabei in der vertikalen Ebene (die der Zeichnungsebene entspricht) liegt, vgl. Figur 6a.

Es wird bei dieser Gelegenheit angemerkt, dass die Begriffe "Normalenvektor" und "Normale" in der vorliegenden Beschreibung als Synonyme verwendet werden. Genaugenommen wird eine Gerade, die den Normalenvektor als Richtungsvektor besitzt, als Normale bezeichnet.

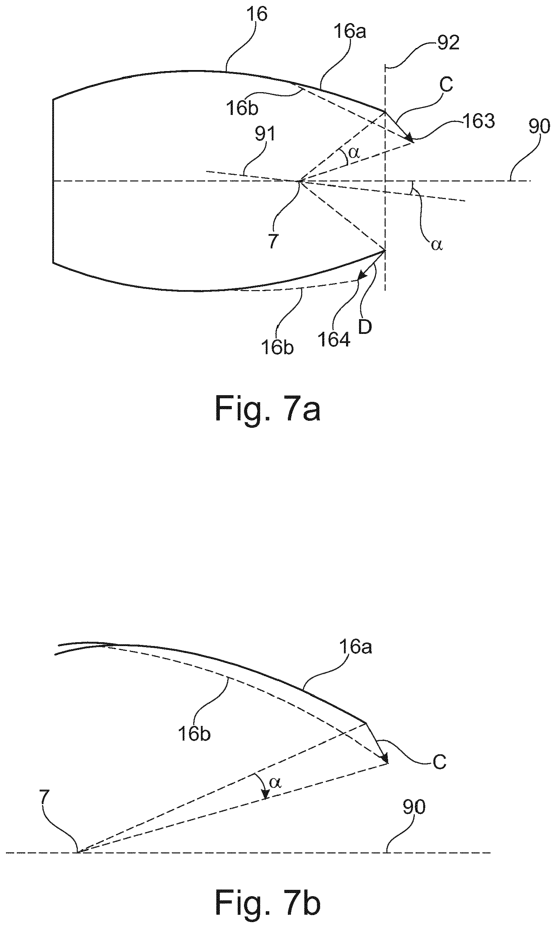

Die Figuren 7a und 7b verdeutlichen die strukturelle Veränderung, die eine nominelle Schubdüse 16 erfährt, um einen Knickwinkel α zu realisieren. Als nominelle Schubdüse wird dabei eine Schubdüse bezeichnet, deren Mittelachse auf der Maschinenachse 90 des Turbofantriebwerk liegt.

Die durchgezogene Linie 16a zeigt dabei die nominelle Schubdüse. Die Mittelachse der Schubdüse 16 liegt auf der Maschinenachse 90 des Turbofantriebwerk. Die Hinterkante liegt in der Ebene 92. Ausgehend von einer solchen nominellen Schubdüse wird die mit einem Knickwinkel versehene Schubdüse durch eine Drehung um eine Drehachse 7 erreicht, der die Maschinenachse 90 des Turbofantriebwerk schneidet und senkrecht zur vertikalen Ebene verläuft. Die Drehung um den Winkel α erfolgt im Uhrzeigersinn, d.h. mit negativem mathematischen Winkel. Die Hinterkante wird dabei in der dargestellten Schnittansicht mit gedreht, was zu den durch die Pfeile C und D dargestellten Verschiebungen der Hinterkante führt. Die Innenkontur der Schubdüse 16 wird entsprechend der gestrichelten Linie 16b modifiziert. Nach der Drehung ist die Mittellinie 91 der Schubdüse nicht mehr identisch mit der Maschinenachse 90, sondern um den Winkel α gegenüber der Maschinenachse 91 verdreht.

Es wird darauf hingewiesen, dass durch die Drehung der Schubdüse 16 ebenfalls erreicht wird, dass ein Bereich 163 der Hinterkante eine stromabwärtigere axiale Position aufweist als ein diametral gegenüber liegender Bereich 164 der Hinterkante. Dies ist aber nicht zu verwechseln mit dem Schrägstellungswinkel, da letzterer sich auf eine Drehung bezogen auf die Mittellinie der Schubdüse bezieht. Bezogen auf die Mittellinie der Schubdüse führt die Drehung um die Drehachse 7 nicht zu einer Schrägstellung der Düsenaustrittsfläche.

Die Figur 7b zeigt die erfolgte Drehung der Schubdüse in vergrößerter Darstellung. Die Erläuterungen in Bezug auf die Figur 7a gelten entsprechend.

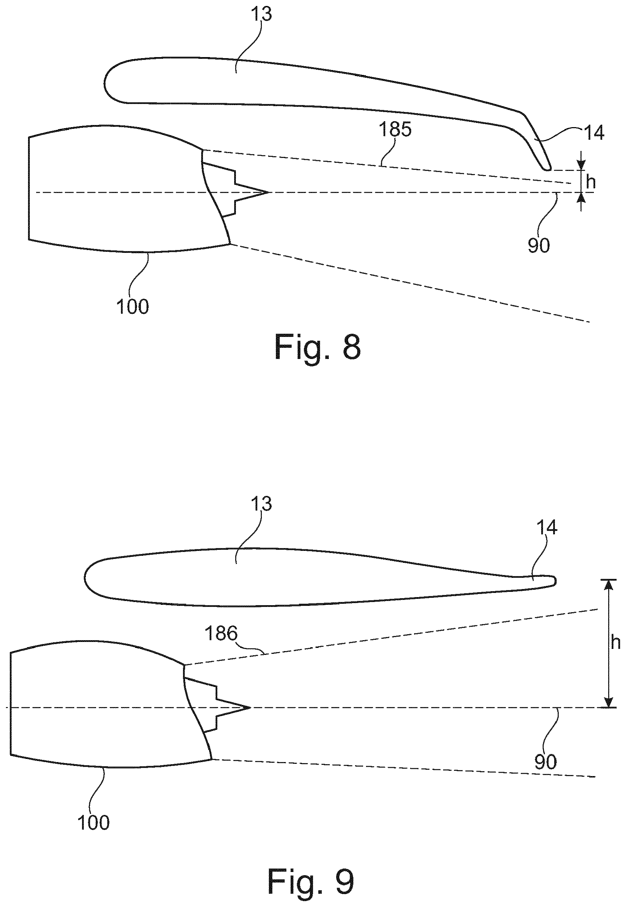

Die Figuren 8 und 9 verdeutlichen die Abhängigkeit der insgesamt aus der Bereitstellung eines Knickwinkels und eines Schrägstellungswinkels resultierende Ablenkung des Austrittsstrahls vom Betriebsmodus. Die Figur 8 zeigt den Startschub, wenn die Flügelklappen 14 maximal ausgefahren sind. Der Austrittsstrahl 185 wird schräg nach unten abgelenkt, so dass eine Interaktion mit den Flügelklappen 14 verhindert wird. Die Figur 9 zeigt den Reiseflugschub. Der durch den Schrägstellungswinkel bereitgestellte Effekt hebt nun den durch den Knickwinkel bereitgestellten Effekt im Wesentlichen auf, so dass der Austrittsstrahl 186 im Wesentlichen in axialer Richtung abgestrahlt wird, ohne wesentliche vertikale Komponente nach unten. Da die Flügelklappen 14 eingefahren sind, ist dies unproblematisch.

Die Figur 10 verdeutlicht weitergehend die erläuterte Abhängigkeit der resultierenden Ablenkung des Austrittsstrahls vom Betriebsmodus. Auf der x-Achse ist dabei der Quotient zwischen Düseninnendruck pᵢ und dem Umgebungsdruck p₀ angegeben. Die y-Achse gibt die Richtung des resultierenden Schubvektors des Austrittsstrahls an, wobei die Abweichung gegenüber der x-Achse in Grad angegeben ist. Die Gesamtablenkung U, die für drei Beispiele U₄, U₅, U₆ dargestellt ist, ist die Addition aus den Ablenkungen, die auf dem Knickwinkel α basieren und den Ablenkungen, die auf dem Schrägstellungswinkel β basieren. Hierfür sind verschiedene beispielhafte Werte angegeben. Beim Startschub S wirkt im Wesentlichen nur die aus dem Knickwinkel α resultierende Strahlablenkung. Mit zunehmendem Druckverhältnis pᵢ/p₀ nimmt der aus dem Schrägstellungswinkel sich ergebende Anteil der Ablenkung des Austrittsstrahls zu. Beim Reiseflugschub CR heben sich die beiden Effekte im Wesentlichen auf. Bei noch höheren Druckverhältnissen überwiegt der Anteil der Strahlablenkung aus dem Schrägstellungswinkel.

Die vorliegende Erfindung beschränkt sich in ihrer Ausgestaltung nicht auf die vorstehend beschriebenen Ausführungsbeispiele, die lediglich beispielhaft zu verstehen sind. Insbesondere sind die dargestellten Schubdüsen nur schematisch dargestellt.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Turbofantriebwerk, das dazu vorgesehen und geeignet ist, unter einer Tragfläche (13) eines Flugzeugs angeordnet zu sein, wobei das Turbofantriebwerk aufweist:
- ein Kerntriebwerk, das einen Verdichter (20, 30), eine Brennkammer (40) und eine Turbine (50, 60, 70) umfasst,
- einen Primärstromkanal (5), der durch das Kerntriebwerk führt,
- einen Sekundärstromkanal (4), der am Kerntriebwerk vorbei führt,
- eine Maschinenachse (90) des Kerntriebwerks,
- eine Schubdüse (16), die eine separate Schubdüse für den Sekundärstromkanal (4) oder eine integrale Schubdüse für den Primärstromkanal (5) und den Sekundärstromkanal (4) ist, und die aufweist:
∘ eine Mittellinie (91),
∘ eine Düsenaustrittsfläche (160),
**dadurch gekennzeichnet,**
**dass** die Schubdüse (16) unter Ausbildung eines Knickwinkels (α), den die Mittellinie (91) der Schubdüse (16) zumindest am Düsenaustritt gegenüber der Maschinenachse (90) bildet, gegenüber der Maschinenachse (90) gekippt und die Düsenaustrittsfläche (160) der Schubdüse (16) unter Ausbildung eines Schrägstellungswinkels (β), den eine Normale (N) der Düsenaustrittsfläche (160) gegenüber der Mittellinie (91) der Schubdüse (16) bildet, gegenüber der Mittellinie (91) der Schubdüse (16) schräg ausgerichtet ist.

2. Turbofantriebwerk nach Anspruch 1, **dadurch gekennzeichnet, dass** der Knickwinkel (α) und der Schrägstellungswinkel (β) ein unterschiedliches Vorzeichen aufweisen.

3. Turbofantriebwerk nach Anspruch 2, **dadurch gekennzeichnet, dass** der Knickwinkel (α) negativ ist, wobei die Mittellinie (91) der Schubdüse (16) nach unten gegenüber der Maschinenachse (90) gekippt ist.

4. Turbofantriebwerk nach Anspruch 2 oder 3, **dadurch gekennzeichnet, dass** der Schrägstellungswinkel (β) positiv ist, wobei die Normale (N) der Düsenaustrittsfläche (160) nach oben gegenüber der Mittellinie (91) der Schubdüse (16) gekippt ist.

5. Turbofantriebwerk nach einem der vorangehenden Ansprüche, **dadurch gekennzeichnet, dass** der Knickwinkel (α) im Bereich kleiner 0° und größergleich -4° liegt.

6. Turbofantriebwerk nach einem der vorangehenden Ansprüche, **dadurch gekennzeichnet, dass** der Schrägstellungswinkel (β) im Bereich größer 0° und kleinergleich 5° liegt.

7. Turbofantriebwerk nach einem der vorangehenden Ansprüche, **dadurch gekennzeichnet, dass** zur Ausbildung des Schrägstellungswinkels (β) ein erster Hinterkantenabschnitt (161) der Schubdüse (16) sich weiter in Längsrichtung der Schubdüse erstreckt als ein diametral gegenüberliegender zweiter Hinterkantenabschnitt (162) der Schubdüse (16).

8. Turbofantriebwerk nach Anspruch 7, **dadurch gekennzeichnet, dass** die Hinterkante (165) zwischen dem ersten Hinterkantenabschnitt (161) und dem zweiten Hinterkantenabschnitt (162) geradlinig verläuft.

9. Turbofantriebwerk nach Anspruch 7, **dadurch gekennzeichnet, dass** die Hinterkante (165) zwischen dem ersten Hinterkantenabschnitt (161) und dem zweiten Hinterkantenabschnitt (162) gekrümmt oder gewellt verläuft.

10. Turbofantriebwerk nach einem der Ansprüche 7 bis 9, **dadurch gekennzeichnet, dass** der erste Hinterkantenabschnitt (161) der Schubdüse (16), der sich weiter in Längsrichtung der Schubdüse erstreckt, an der Unterseite der Schubdüse (16) und der diametral gegenüberliegende zweite Hinterkantenabschnitt (162) der Schubdüse (16) an der Oberseite der Schubdüse (16) ausgebildet ist.

11. Turbofantriebwerk nach einem der vorangehenden Ansprüche, **dadurch gekennzeichnet, dass** die Schubdüse (16) um den Knickwinkel (α) gegenüber der Maschinenachse (90) verkippt ist, wobei die Drehachse (7), um die die Schubdüse (16) verkippt ist, die Maschinenachse (90) schneidet und senkrecht zur vertikalen Ebene verläuft.

12. Turbofantriebwerk nach einem der vorangehenden Ansprüche, **dadurch gekennzeichnet, dass** bezogen auf die vollständig ausgefahrene hintere Flügelklappe (14) der Tragfläche (13), unter der das Turbofantriebwerk angeordnet ist, das Verhältnis von vertikalem Abstand (h) zwischen der Hinterkante der Flügelklappe (14) und der Maschinenachse (90) zu dem axialen Abstand (L) zwischen der Düsenaustrittsfläche (160) und der axialen Position der Hinterkante der Flügelklappe (14) im Bereich zwischen 0,2 und 1 liegt.

13. Turbofantriebwerk nach einem der vorangehenden Ansprüche, **dadurch gekennzeichnet, dass** bezogen auf die vollständig ausgefahrene hintere Flügelklappe (14) der Tragfläche (13), unter der das Turbofantriebwerk angeordnet ist, das Verhältnis von dem axialen Abstand (L) zwischen der Düsenaustrittsfläche (160) und der axialen Position der Hinterkante der Flügelklappe (14) zum Durchmesser (D) der Düsenaustrittsfläche (16) im Bereich zwischen 2 und 3 liegt.

14. Turbofantriebwerk, das dazu vorgesehen und geeignet ist, unter einer Tragfläche (13) eines Flugzeugs angeordnet zu sein, wobei das Turbofantriebwerk aufweist:
- ein Kerntriebwerk, das einen Verdichter (20, 30), eine Brennkammer (40) und eine Turbine (50, 60, 70) umfasst, ,
- einen Primärstromkanal (5), der durch das Kerntriebwerk führt,
- einen Sekundärstromkanal (4), der am Kerntriebwerk vorbei führt,
- eine Maschinenachse (90) des Kerntriebwerks,
- eine Schubdüse (16), die eine separate Schubdüse für den Sekundärstromkanal (4) oder eine integrale Schubdüse für den Primärstromkanal (5) und den Sekundärstromkanal (4) ist, und die aufweist:
∘ eine Mittellinie (91),
∘ eine Düsenaustrittsfläche (160),
**dadurch gekennzeichnet,**
**dass** die Schubdüse (16) unter Ausbildung eines Knickwinkels (α), den die Mittellinie (91) der Schubdüse (16) zumindest am Düsenaustritt gegenüber der Maschinenachse (90) bildet, gegenüber der Maschinenachse (90) nach unten gekippt und die Düsenaustrittsfläche (160) der Schubdüse unter Ausbildung eines Schrägstellungswinkels (β), den eine Normale (N) der Düsenaustrittsfläche gegenüber der Mittellinie (91) der Schubdüse (16) bildet, schräg nach oben ausgerichtet ist.

15. Flugzeug mit einem Turbofantriebwerk gemäß Anspruch 1, das unter einer Tragfläche (13) des Flugzeugs angeordnet ist.
